# EUROPEAN PATENT APPLICATION

(11) **EP 4 243 476 A1**
(43) Date of publication of application: **13.09.2023**
(21) Application number: 21934206.0
(22) Date of filing: 30.04.2021
(51) Int. Cl.: H04W 16/28

(54) **METHOD FOR WIRELESS COMMUNICATION AND TERMINAL DEVICE**

(30) Priority: 31.03.2021 WO PCT/CN2021/084639
(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Taor, Simon Edward William
(86) International application number: PCT/CN2021/091259
(87) International publication number: WO 2022/205555

(57) **Abstract**

The embodiments of the present disclosure provide a wireless communication method and a terminal device. After a Small Data Transmission (SDT) is triggered by a higher layer, a terminal device can determine whether SSBs in a first beam set can be used for a Configured Grant resource based SDT (CG-SDT), and if so, perform the CG-SDT preferentially. The wireless communication method includes: determining, by a terminal device, whether Synchronization Signal Blocks (SSBs) in a first beam set are usable for a CG-SDT.

## Description

The present application claims priority to a PCT Application No. PCT/CN2021/084639, titled "WIRELESS COMMUNICATION METHOD AND TERMINAL DEVICE", filed on March 31, 2021 with China National Intellectual Property Administration, which is incorporated herein by reference in its entirety.

### TECHNICAL FIELD

The embodiments of the present disclosure relate to communication technology, and more particularly, to a wireless communication method and a terminal device.

### BACKGROUND

In the New Radio (NR) system, when a terminal device is in a Radio Resource Control (RRC) INACTIVE state, it can perform a Small Data Transmission (SDT), which can be an uplink small data transmission based on a random access process (two-step/four-step) or an uplink small data transmission based on a pre-configured resource (such as Configure Grant (CG) resource). When a higher layer triggers the SDT, how the terminal device determines whether to perform a CG resource based SDT (CG-SDT) or a Random Access process based SDT (RA-SDT) is a problem to be solved.

### SUMMARY

The embodiments of the present disclosure provide a wireless communication method and a terminal device. After an SDT is triggered by a higher layer, a terminal device can determine whether Synchronization Signal Blocks (SSBs) in a first beam set are usable for a CG-SDT, and if so, perform the CG-SDT preferentially.

In a first aspect, a wireless communication method is provided. The method includes:
determining, by a terminal device, whether Synchronization Signal Blocks (SSBs) in a first beam set are usable for a Configured Grant (CG) resource based Small Data Transmission (CG-SDT).

In a second aspect, a terminal device is provided. The terminal device is configured to perform the method according to the above first aspect.

In particular, the terminal device includes one or more functional modules configured to perform the method according to the above first aspect.

In a third aspect, a terminal device is provided. The terminal device includes a processor and a memory. The memory is configured to store a computer program, and the processor is configured to invoke and execute the computer program stored in the memory to perform the method according to the above first aspect.

In a fourth aspect, an apparatus is provided. The apparatus is configured to perform the method according to the above first aspect.

In particular, the apparatus includes a processor configured to invoke and execute a computer program from a memory, to enable a device provided with the apparatus to perform the method according to the above first aspect.

In a fifth aspect, a computer-readable storage medium is provided. The computer-readable storage medium is configured to store a computer program that enables a computer to perform the method according to the above first aspect.

In a sixth aspect, a computer program product is provided. The computer program product includes computer program instructions that cause a computer to perform the method according to the above first aspect.

In a seventh aspect, a computer program is provided. The computer program, when executed on a computer, causes the computer to perform the method according to the above first aspect.

With the above technical solutions, after an SDT is triggered by the higher layer, the terminal device can determine whether the SSBs in the first beam set can be used for the CG-SDT, and if so, perform the CG-SDT preferentially. Therefore, the terminal device can perform beam selection in the SDT more efficiently.

### BRIEF DESCRIPTION OF DRAWINGS

FIG. 1 is a schematic diagram showing an architecture of a communication system according to an embodiment of the present disclosure.
FIG. 2 is a schematic diagram showing an air interface process for uplink Early Data Transmission (EDT) according to the present disclosure.
FIG. 3 is a schematic diagram showing an air interface process for Preconfigured Uplink Resource (PUR) transmission according to the present disclosure.
FIG. 4 is a flowchart illustrating a wireless communication method according to an embodiment of the present disclosure.
FIG. 5 is a schematic block diagram of a terminal device according to an embodiment of the present disclosure.
FIG. 6 is a schematic block diagram of a communication device according to an embodiment of the present disclosure.
FIG. 7 is a schematic block diagram of an apparatus according to an embodiment of the present disclosure.
FIG. 8 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, such as a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, New Radio (NR) system, evolved NR system, an LTE-based access to unlicensed spectrum (LTE-U) system, an NR-based access to unlicensed spectrum (NR-U) system, an Non-Terrestrial Network (NTN) system, a Universal Mobile Telecommunication System (UMTS), a Wireless Local Area Networks (WLAN), Wireless Fidelity (WiFi), a 5^{th} Generation (5G) system, or other communication systems.

Generally speaking, conventional communication systems can support a limited number of connections and are easy to implement. However, with the development of communication technology, mobile communication systems will support not only traditional communication, but also will support, for example, Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure may also be applied to these communication systems.

In some embodiments, the communication system according to an embodiment of the present disclosure may be applied to a Carrier Aggregation (CA) scenario, a Dual Connectivity (DC) scenario, a Standalone (SA) network deployment scenario, and the like.

In some embodiments, the communication system according to an embodiment of the present disclosure may be applied to unlicensed spectrum. The unlicensed spectrum may also be considered as shared spectrum. Alternatively, the communication system according to an embodiment of the present disclosure may be applied to licensed spectrum. The licensed spectrum may also be considered as non-shared spectrum.

The embodiments of the present disclosure are described in conjunction with a network device and a terminal device. The terminal device may refer to a User Equipment (LTE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device may be deployed on land, including indoor or outdoor, handheld, worn, or vehicle-mounted, may also be deployed on water (e.g., on a ship and the like), or may also be deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a vehicle-mounted terminal device, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As non-limiting examples, in an embodiment of the present disclosure, the terminal device may also be a wearable device. The wearable device, also known as wearable smart device, is a general term for wearable devices that are intelligently designed and developed from daily wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. In some embodiments, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. In some embodiments, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a Pico cell, a Femto cell, or the like. These small cells have characteristics such as small coverage and low transmission power, and are suitable for providing high-rate data transmission services.

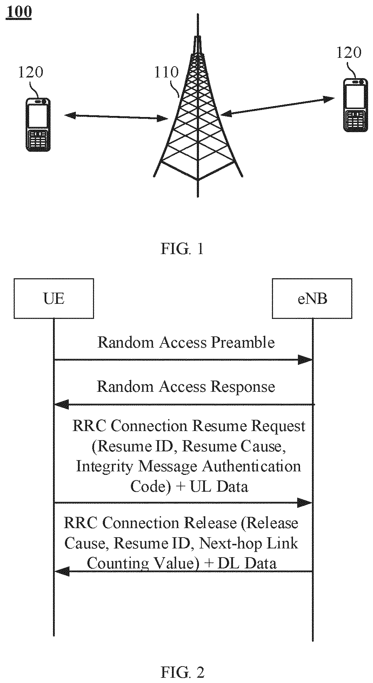

Exemplarily, FIG. 1 shows a communication system 100 in which an embodiment of the present disclosure can be applied. A shown in FIG. 1, the communication system 100 may include a network device 110 which may be a device capable of communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. In some embodiments, the communication system 100 may include multiple network devices, and the coverage of each network device may include other numbers of terminal devices. The embodiment of the present disclosure is not limited to this.

In some embodiments, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

The terms used in the embodiments of the present disclosure are provided only for explaining the specific embodiments of the present disclosure, rather than limiting the present disclosure. The terms such as "first", "second", "third", "fourth", etc., as used in the specification, claims and figures of the present disclosure are used for distinguishing different objects from each other, rather than defining a specific order. In addition, the terms such as "including" and "having" and any variants thereof are intended to cover non-exclusive inclusion.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In order to better understand the embodiments of the present disclosure, the LTE Uplink (UL) Early Data Transmission (EDT) related to the present disclosure will be described.

In LTE, EDT (also known as small data transmission) has been introduced. During this process, the UE may achieve transmission of uplink and/or downlink small data packets while always remaining in an idle state, a suspend state, or an inactive state, as in an air interface process for UP-EDT shown in FIG. 2.

For an EDT process, in fact, the UE does not enter a connected state, and completes the transmission of small data packets. In terms of configuration, the network will configure a maximum Transport Block (TB) size that the network allows to transmit currently on a System Information Block 2 (SIB2), and the UE can determine the amount of data to be transmitted. If it is smaller than the maximum TB size as broadcasted, the UE can initiate an EDT transmission; or otherwise the UE can use a normal connection establishment process and enters the connected state to transmit the data.

In order to better understand the embodiments of the present disclosure, a Preconfigured Uplink Resource (PUR) transmission related to the present disclosure will be described.

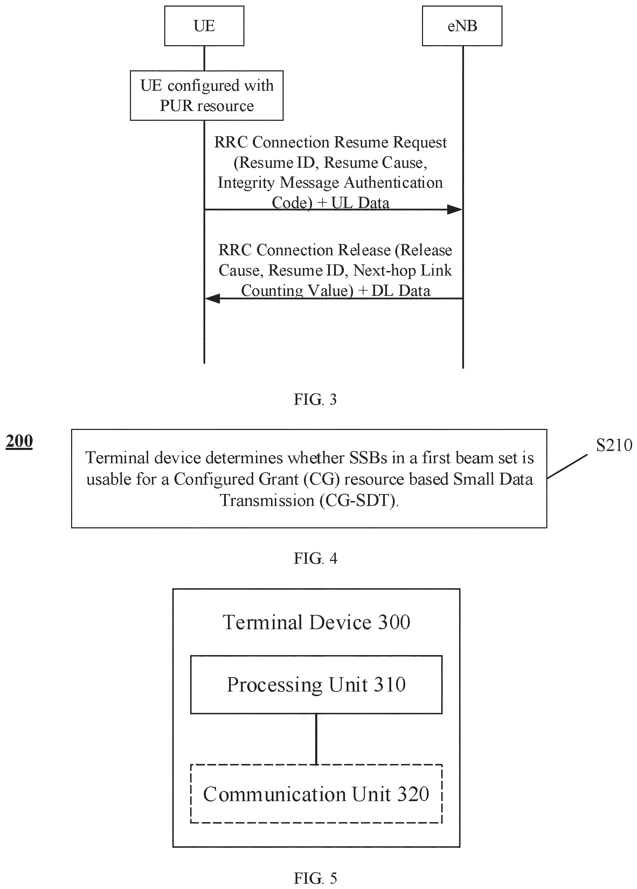

In LTE Release 16, for Narrow Band Internet of Things (NB-IoT) and Enhanced Machine Type Communication (eMTC) scenarios, a data transmission using PUR in the idle state is introduced. The PUR is only valid in the currently configured cell, that is, when the UE detects a cell change and initiates random access in the new cell, the UE needs to release the PUR configured in the previous cell. The PUR transmission process is similar to the LTE UP-EDT, except that the process of transmitting a preamble to obtain a Timing Advance (TA) and an uplink grant (UL grant) is omitted. Specifically, the air interface process for PUR transmission is shown in FIG. 3.

An important prerequisite for the UE to perform the data transmission using the PUR is to have a valid TA. According to the protocol, the condition for determining whether the TA is valid includes at least one of the following:
a TA Timer (TAT) is in a running state; and/or
a change (increase or decrease) in Reference Signal Received Power (RSRP) is not greater than/smaller than a predetermined threshold.

As part of a PUR configuration, a TAT configuration is transmitted to the LJE via an RRC Connection Release (RRCConnectionRelease) message. An RRC layer instructs a Media Access Control (MAC) layer to apply or release a corresponding configuration according to configuration information of the TAT. After receiving the RRCConnectionRelease message, the RRC layer determines whether the PUR configuration (pur-Config) is included. If it is not included, the UE will keep the existing configuration unchanged, and the TAT will not be restarted; or if it is included, the RRC layer will perform one of the following behaviors according to the pur-Config configuration.

If the pur-Config is set to update (setup), the UE stores or replaces the PUR configuration. If the pur-Config includes a PUR time synchronization timer (pur-TimeAlignmentTimer), the RRC layer instructs the lower layer to apply the pur-TimeAlignmentTimer; if the pur-Config does not include the pur-TimeAlignmentTimer, the RRC layer instructs the lower layer to release the pur-TimeAlignmentTimer.

If the pur-Config is set to release, the UE releases the PUR configuration and instructs the lower layer to release the pur-TimeAlignmentTimer.

If the network does not give an explicit instruction, and the UE currently has a pre-configured resource, the default behavior of the UE is to maintain the current configuration after receiving the RRC release.

The TAT in the PUR transmission is maintained by the MAC layer. If the MAC layer receives the pur-TimeAlignmentTimer configured by the higher layer, it will start or restart the TAT. If the MAC layer receives an instruction to release the pur-TimeAlignmentTimer from the higher layer, it will stop the TAT. In addition to starting or restarting the TAT according to the instruction from the higher layer, the MAC also needs to start or restart the TAT according to a received Timing Advance Command (TAC) MAC Control Element (CE) or a time adjustment amount indicated in a PDCCH.

To facilitate better understanding of the embodiments of the present disclosure, a Small Data Transmission (SDT) related to the present disclosure will be described.

In the 5G NR system, the RRC states are divided into three types: an RRC idle state (RRC_IDLE), an RRC inactive state (RRC_INACTIVE), and an RRC connected state (RRC_CONNECTED). The RRC_INACTIVE state is a new state introduced in the 5G system from a perspective of energy saving. For the UE in the RRC_INACTIVE state, the radio bearer and all radio resources will be released, but the LTE and the base station both maintain a LTE access context to quickly resume the RRC connection. Typically, LTEs with infrequent data transmission are kept in the RRC_INACTIVE state. Before Release 16 (Rel-16), the UE in the RRC_INACTIVE state does not support data transmission. When the uplink or downlink data arrives, the UE needs to resume the connection and release to the INACTIVE state after the data transmission is completed. For a UE with a small amount of data and low transmission frequency, such transmission mechanism will cause unnecessary power consumption and signaling overhead. Therefore, in Release17 (Rel-17), a project for research on Small Data Transmission (SDT) under RRC_INACTIVE is initiated, with two major target directions: an uplink SDT based on random access process (two-step/four-step) and an uplink SDT based on pre-configured resources (such as CG Type 1).

The configuration granularity of Configure Grant (CG) resources is per beam.

When the network configures both a Random Access SDT (RA-SDT) resource and a CG-SDT resource for the UE, if the CG resource on the currently selected carrier is valid, the UE will preferentially choose to perform the CG-SDT process.

After the higher layer triggers an SDT, the UE needs to determine whether to perform a CG-SDT or an RA-SDT. In addition, at the present stage, in the random access process, the LTE needs to first select a beam, and further perform steps such as a random access preamble transmission based on the random access resource on the selected beam. In the SDT, if the UE needs to first determine whether it can perform the CG-SDT, and the beam selection has been performed during the determining process, then if the UE cannot perform the CG-SDT and falls back to the RA-SDT, a repeated beam process selection will cause additional delay and unnecessary overhead for the UE.

Based on the above problems, the present disclosure provides a beam selection scheme in an SDT. When the SDT is triggered by a higher layer, a terminal device can determine whether SSBs in a first beam set can be used for a CG-SDT, and if so, perform the CS-SDT preferentially. Therefore, the terminal device can perform beam selection in the SDT more efficiently.

It should be noted that the SSB may also be referred to as a Synchronization Signal/Physical Broadcast Channel (SS/PBCH) block.

The technical solutions of the present disclosure will be described in detail below with reference to specific embodiments.

FIG. 4 is a schematic flowchart illustrating a wireless communication method 200 according to an embodiment of the present disclosure. As shown in FIG. 4, the wireless communication method 200 may include at least part of the following content.

At S210, a terminal device determines whether SSBs in a first beam set are usable for a CG-SDT.

In an embodiment of the present disclosure, the terminal device may be in an RRC idle state (RRC IDLE) or an RRC inactive state (RRC INACTIVE).

It should be noted that the above first beam set may also be referred to as a first SSB set or a first signal set, the present disclosure is not limited to this.

In some embodiments, the first beam set may further include some other signals, for example, a Sounding Reference Signal (SRS), a Channel State Information Reference Signal (CSI-RS), and the like.

In some embodiments, the CG resources for the SDT are configured by a network device. For example, the network device may configure the CG resources for the SDT on some beams (such as SSBs). In another example, the network device may configure the CG resources on all or a part of beams, and the configuration granularity can be that one beam corresponds to a set of CG resources, or a plurality of beams shares a set of CG resources.

In some embodiments, the first beam set may include all SSBs. For example, the first beam set may include all current SSBs of the terminal device, or the first beam set may include all SSBs available to or usable by the terminal device.

In some embodiments, the first beam set may include a part or all of SSBs configured with CG resources.

In Embodiment 1, the terminal device determines whether the SSBs in the first beam set are usable for the CG-SDT according to whether RSRP of the SSBs in the first beam set satisfies a first threshold.

In some implementations of Embodiment 1, the first beam set may include a part or all of SSBs configured with CG resources, and the above S210 may specifically include:
determining, by the terminal device, that the SSBs in the first beam set are usable for the CG-SDT when the RSRP of at least one SSB in the first beam set satisfies the first threshold; and/ or
determining, by the terminal device, that the SSBs in the first beam set are unusable for the CG-SDT when no SSB having RSRP satisfying the first threshold exists in the first beam set; and/or
determining, by the terminal device, that the SSBs in the first beam set are usable for the CG-SDT when no SSB having RSRP satisfying the first threshold exists in the first beam set.

In some implementations, the first threshold may be pre-configured or agreed by a protocol, or the first threshold may be configured by a network device. For example, the network may include the first threshold in a CG resource configuration, or configure the first threshold via an RRC release message.

In some implementations, the first threshold for beam selection may be common, that is, CG-SDT and RA-SDT use the same threshold for beam selection.

Further, different first thresholds may be used for different SDT types, that is, the threshold used for beam selection when the terminal device performs the CG-SDT and the threshold used for beam selection when the terminal device performs the RA-SDT may be different, and the network may configure them separately.

In some implementations, the configuration of the first threshold may be included in the CG resource configuration, and/or the configuration of the first threshold may be included in an RA-SDT configuration.

In some implementations, the first threshold may be used for the CG-SDT and the RA-SDT.

In some implementations, the first threshold may include a first sub-threshold and a second sub-threshold. The first sub-threshold is used for the CG-SDT, and the second sub-threshold is used for the RA-SDT.

In some implementations, a first threshold configuration for configuring the first threshold may be included in a configuration of the CG resource and/or a configuration of an RA resource.

In some implementations, a first sub-threshold configuration for configuring the first sub-threshold may be included in a configuration of the CG resource, and a second sub-threshold configuration for configuring the second sub-threshold may be included in a configuration of the RA resource.

In some implementations, one or more of the first threshold configuration for configuring the first threshold, the first sub-threshold configuration for configuring the first sub-threshold, and the second sub-threshold configuration for configuring the second sub-threshold may be included in an RRC release message.

In some implementations of Embodiment 1, when the RSRP of at least one SSB satisfies the first threshold and the terminal device determines that the SSBs in the first beam set are usable for the CG-SDT, the terminal device may perform the SDT using a CG resource on a first SSB of the at least one SSB.

In some implementations, the first SSB may be any one of the at least one SSB, or the first SSB may be the SSB with the highest RSRP among the at least one SSB, or the first SSB may be the SSB with the greatest or smallest index among the at least one SSB.

In some implementations of Embodiment 1, when the terminal device determines that the SSBs in the first beam set are unusable for the CG-SDT, the terminal device may perform an RA-SDT using a second SSB in the first beam set; transmit a random access preamble on a third SSB in the first beam set; or perform a random access resource selection process, and perform an RA-SDT on a fourth SSB in a selected resource.

In some implementations, the second SSB may be any one of the at least one SSB, or the second SSB may be the SSB with the highest RSRP among the at least one SSB, or the second SSB may be the SSB with the greatest or smallest index among the at least one SSB.

In some implementations, the third SSB may be any one of the at least one SSB, or the third SSB may be the SSB with the highest RSRP among the at least one SSB, or the third SSB may be the SSB with the greatest or smallest index among the at least one SSB.

In some implementations of Embodiment 1, when no SSB having RSRP satisfying the first threshold exists in the first beam set and the terminal device determines that the SSBs in the first beam set are usable for the CG-SDT, the terminal device may perform the SDT using a CG resource on a fifth SSB in the first beam set.

In some implementations, the fifth SSB may be any one of the at least one SSB, or the fifth SSB may be the SSB with the highest RSRP among the at least one SSB, or the fifth SSB may be the SSB with the greatest or smallest index among the at least one SSB.

In Embodiment 1, for example, it is assumed that the terminal device currently has 16 SSBs, and the network configures CG resources on 8 SSBs (that is, the first beam set). When the terminal device performs an SDT-type selection, the terminal device first determines whether the SSBs in the first beam set (that is, the SSBs configured with CG resources) satisfy a threshold. Specifically, the terminal device determines whether the RSRP of the SSBs in the first beam set satisfies the first threshold. If the RSRP of at least one SSB in the first beam set satisfies the first threshold, the terminal device uses the CG resource on one of the at least one SSB to perform a CG-SDT, or otherwise the terminal device performs an RA-SDT or the terminal device randomly selects a CG resource on an SSB in the first beam set to perform a CG-SDT.

In Embodiment 1, the terminal device may determine to perform an RA-SDT. For example, the terminal device selects one SSB from 16 SSBs to perform the RA-SDT. In another example, the terminal device performs beam selection from 16 SSBs, and transmits a random access preamble based on the selection result, without performing the resource selection process/beam selection process in the random access process. In another example, the terminal device ignores the current beam selection result, re-performs a random access resource selection process/beam selection, and performs the RA-SDT on an SSB in the selected resource/beam.

In Embodiment 2, the terminal device determines whether the SSBs in the first beam set are usable for the CG-SDT according to whether the SSBs in the first beam set include available CG resources.

In some implementations of Embodiment 2, the first beam set includes all SSBs, and the above S210 may specifically include:
determining, by the terminal device, that the SSBs in the first beam set are usable for the CG-SDT when RSRP of at least one SSB in the first beam set satisfies a first threshold and an available CG resource exists on the at least one SSB; and/or
determining, by the terminal device, that the SSBs in the first beam set are unusable for the CG-SDT when RSRP of at least one SSB in the first beam set satisfies the first threshold and no available CG resource exists on the at least one SSB; and/or
determining, by the terminal device, that the SSBs in the first beam set are unusable for the CG-SDT when no SSB having RSRP satisfying the first threshold exists in the first beam set; and/or
determining, by the terminal device, that the SSBs in the first beam set are usable for the CG-SDT when no SSB having RSRP satisfying the first threshold exists in the first beam set and an available CG resource exists on a randomly selected SSB in the first beam set.

It should be noted that, the description of the first threshold in Embodiment 2 is consistent with the description in Embodiment 1 above, and details thereof will be omitted here.

In some implementations of Embodiment 2, when an available CG resource exists on the at least one SSB and the terminal device determines that the SSBs in the first beam set are usable for the CG-SDT, the terminal device may perform the SDT using a CG resource of one SSB with the available CG resource among the at least one SSB.

In some implementations of Embodiment 2, when an available CG resource exists on the randomly selected SSB in the first beam set and the terminal device determines that the SSBs in the first beam set are usable for the CG-SDT, the terminal device may perform the SDT using the CG resource on the randomly selected SSB in the first beam set.

In some implementations of Embodiment 2, when the terminal device determines that the SSBs in the first beam set are unusable for the CG-SDT, the terminal device may perform an RA-SDT on a sixth SSB in the first beam set; or the terminal device may perform a random access resource selection process, and perform an RA-SDT on a seventh SSB in a selected resource.

In some implementations, the sixth SSB may be any one of the at least one SSB, or the sixth SSB may be the SSB with the highest RSRP among the at least one SSB, or the sixth SSB may be the SSB with the greatest or smallest index among the at least one SSB.

In some implementations, the seventh SSB may be any one of the at least one SSB, or the seventh SSB may be the SSB with the highest RSRP among the at least one SSB, or the seventh SSB may be the SSB with the greatest or smallest index among the at least one SSB.

In some implementations of Embodiment 2, when no SSB having RSRP satisfying the first threshold exists in the first beam set and the terminal device determines that the SSBs in the first beam set are unusable for the CG-SDT, the terminal device may perform an RA-SDT on an eighth SSB in the first beam set; or the terminal device may perform a random access resource selection process, and perform an RA-SDT on a ninth SSB in a selected resource.

In some implementations, the eighth SSB may be any one of the at least one SSB, or the eighth SSB may be the SSB with the highest RSRP among the at least one SSB, or the eighth SSB may be the SSB with the greatest or smallest index among the at least one SSB.

In Embodiment 2, for example, it is assumed that the terminal device currently has 16 SSBs (that is, the first beam set), and the network configures CG resources on 8 SSBs. When the terminal device performs an SDT-type selection, the terminal device first determines whether an SSB that satisfies a threshold exists in the first beam set. Specifically, the terminal device determines whether the RSRP of the SSBs in the first beam set satisfies the first threshold. The terminal device measures the first beam set, and if the RSRP of at least one SSB in the first beam set satisfies the first threshold, the terminal device further determines whether an available CG resource that satisfies the first threshold exists on the SSB, and if so, the terminal device performs a CG-SDT using the CG resource on the SS. Otherwise the terminal device performs an RA-SDT, or the terminal device randomly selects an SSB in the first beam set, and if an available CG resource exists on the randomly selected SSB, the terminal device performs CG-SDT; or otherwise the terminal device performs an RA-SDT.

In Embodiment 2, the terminal device determines to perform the RA-SDT. For example, if no SSB that satisfies the threshold exists in the first beam set, the terminal device selects any of the SSBs to perform the RA-SDT, or the terminal device ignores the current beam selection result, re-performs random access resource selection process/beam selection, and performs the RA-SDT on one SSB in the selected resource/beam. In another example, if an SSB that satisfies the threshold exists in the first beam set, but no CG resource is configured on the SSB, the terminal device selects any of the SSBs that satisfy the threshold to perform the RA-SDT, without performing the resource selection process/beam selection process in the random access process, or the terminal device ignores the current beam selection result, re-performs the random access resource selection process/beam selection process, and performs the RA-SDT on one SSB in the selected resource/beam. In another example, the terminal device selects any SSB from 16 SSBs for directly transmitting a random access preamble, without performing the beam selection process in the random access process.

Therefore, in the embodiment of the present disclosure, after the SDT is triggered by the higher layer, the terminal device can determine whether the SSBs in the first beam set can be used for the CG-SDT, and if so, perform the CG-SDT preferentially. Therefore, the terminal device can perform the beam selection in the SDT more efficiently.

The method embodiments of the present disclosure have been described in detail above with reference to FIG. 4, and the apparatus embodiments of the present disclosure will be described in detail below with reference to FIG. 5 to FIG. 8. It can be appreciated that the apparatus embodiments and the method embodiments correspond to each other, and for similar descriptions, reference can be made to the method embodiments.

FIG. 5 shows a schematic block diagram of a terminal device 300 according to an embodiment of the present disclosure. As shown in FIG. 5, the terminal device 300 includes:
a processing unit 310 configured to determine whether SSBs in a first beam set are usable for a CG-SDT.

In some implementations, the first beam set may include all SSBs, or the first beam set may include a part or all of SSBs configured with CG resources.

In some implementations, the processing unit 310 may be configured to:
determine whether the SSBs in the first beam set are usable for the CG-SDT according to whether RSRP of the SSBs in the first beam set satisfies a first threshold.

In some implementations, the first beam set may include a part or all of SSBs configured with CG resources, and the processing unit 310 may be configured to:
determine that the SSBs in the first beam set are usable for the CG-SDT when the RSRP of at least one SSB in the first beam set satisfies the first threshold; and/or
determine that the SSBs in the first beam set are unusable for the CG-SDT when no SSB having RSRP satisfying the first threshold exists in the first beam set; and/or
determine that the SSBs in the first beam set are usable for the CG-SDT when no SSB having RSRP satisfying the first threshold exists in the first beam set.

In some implementations, when the RSRP of at least one SSB satisfies the first threshold and the terminal device determines that the SSBs in the first beam set are usable for the CG-SDT, the terminal device 300 may further include a communication unit 320 configured to perform the SDT using a CG resource on a first SSB of the at least one SSB.

In some implementations, when the terminal device determines that the SSBs in the first beam set are unusable for the CG-SDT, the terminal device 300 may further include a communication unit 320, in which:
the communication unit 320 may be configured to perform a RA-SDT using a second SSB in the first beam set; or
the communication unit 320 may be configured to transmit a random access preamble on a third SSB in the first beam set; or
the processing unit 320 may be configured to perform a random access resource selection process, and the communication unit is configured to perform an RA-SDT on a fourth SSB in a selected resource.

In some implementations, when no SSB having RSRP satisfying the first threshold exists in the first beam set and the terminal device determines that the SSBs in the first beam set are usable for the CG-SDT, the terminal device 300 may further include a communication unit 320 configured to perform the SDT using a CG resource on a fifth SSB in the first beam set.

In some implementations, the processing unit 310 may be configured to:
determine whether the SSBs in the first beam set are usable for the CG-SDT according to whether the SSBs in the first beam set include available CG resources.

In some implementations, the first beam set may include all SSBs, and
the processing unit 310 may be configured to:
determine that the SSBs in the first beam set are usable for the CG-SDT when RSRP of at least one SSB in the first beam set satisfies a first threshold and an available CG resource exists on the at least one SSB; and/or
determine that the SSBs in the first beam set are unusable for the CG-SDT when RSRP of at least one SSB in the first beam set satisfies the first threshold and no available CG resource exists on the at least one SSB; and/or
determine that the SSBs in the first beam set are unusable for the CG-SDT when no SSB having RSRP satisfying the first threshold exists in the first beam set; and/or
determine that the SSBs in the first beam set are usable for the CG-SDT when no SSB having RSRP satisfying the first threshold exists in the first beam set and an available CG resource exists on a randomly selected SSB in the first beam set.

In some implementations, when the available CG resource exists on the at least one SSB and the terminal device determines that the SSBs in the first beam set are usable for the CG-SDT, the terminal device 300 may include a communication unit 320 configured to perform the SDT using a CG resource of one SSB with an available CG resource among the at least one SSB.

In some implementations, when an available CG resource exists on the randomly selected SSB in the first beam set and the terminal device determines that the SSBs in the first beam set are usable for the CG-SDT, the terminal device 300 includes a communication unit 320 configured to perform the SDT using the CG resource on the randomly selected SSB in the first beam set.

In some implementations, when the terminal device determines that the SSBs in the first beam set are unusable for the CG-SDT, the terminal device 300 may further include a communication unit 320, in which:
the communication unit 320 may be configured to perform a RA-SDT on a sixth SSB in the first beam set; or
the processing unit 320 may be configured to perform a random access resource selection process, and the communication unit is configured to perform the RA-SDT on a seventh SSB in a selected resource.

In some implementations, when no SSB having RSRP satisfying the first threshold exists in the first beam set and the terminal device determines that the SSBs in the first beam set are unusable for the CG-SDT, the terminal device 300 may include a communication unit 320, in which:
the communication unit 320 may be configured to perform an RA-SDT on an eighth SSB in the first beam set; or
the processing unit 310 may be configured to perform a random access resource selection process, and the communication unit is configured to perform the RA-SDT on a ninth SSB in a selected resource.

In some implementations, the first threshold may be pre-configured or agreed by a protocol, or the first threshold may be configured by a network device.

In some implementations, the CG resource used for the SDT may be configured by a network device.

In some implementations, the first threshold for beam selection may be common, that is, the CG-SDT and the RA-SDT use the same threshold for beam selection.

Further, different first thresholds may be used for different SDT types, that is, the threshold used for beam selection when the terminal device performs CG-SDT and the threshold used for beam selection when the terminal device performs RA-SDT may be different, and the network may configure them separately.

In some embodiments, the configuration of the first threshold may be included in the CG resource configuration, and/or in an RA-SDT configuration.

In some embodiments, the first threshold may be used for the CG-SDT and an RA-SDT; or
the first threshold may include a first sub-threshold and a second sub-threshold,
in which the first sub-threshold is used for the CG-SDT, and the second sub-threshold is used for the RA-SDT.

In some embodiments, a first threshold configuration for configuring the first threshold may be included in a configuration of the CG resource and/or a configuration of an RA resource; or
a first sub-threshold configuration for configuring the first sub-threshold may be included in a configuration of the CG resource, and a second sub-threshold configuration for configuring the second sub-threshold may be included in a configuration of the RA resource; or
one or more of the first threshold configuration for configuring the first threshold, the first sub-threshold configuration for configuring the first sub-threshold, and the second sub-threshold configuration for configuring the second sub-threshold may be included in a Radio Resource Control (RRC) release message.

In some embodiments, the above communication unit may be a communication interface or a transceiver, or an input/output interface of a communication chip or a system-on-chip. The above processing unit may be one or more processors.

It can be appreciated that the terminal device 300 according to the embodiment of the present disclosure may correspond to the terminal device in the method embodiment of the present disclosure, and the above and other operations and/or functions of the respective units in the terminal device 300 are provided for the purpose of implementing the process flow corresponding to the terminal device in the wireless communication method 200 shown in FIG. 4, and details thereof will be not omitted here for brevity.

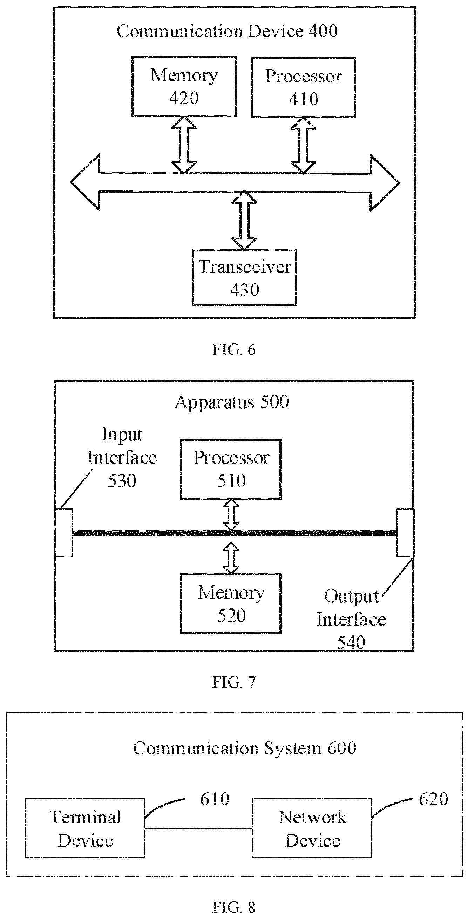

FIG. 6 is a schematic diagram showing a structure of a communication device 400 according to an embodiment of the present disclosure. The communication device 400 shown in FIG. 6 includes a processor 410, and the processor 410 can invoke and execute a computer program from a memory to implement the method according to the embodiment of the present disclosure.

In some embodiments, as shown in FIG. 6, the communication device 400 may further include a memory 420. The processor 410 can invoke and execute a computer program from the memory 420 to implement the method according to the embodiment of the present disclosure.

The memory 420 may be a separate device independent from the processor 410, or may be integrated in the processor 410.

In some embodiments, as shown in FIG. 6, the communication device 400 may further include a transceiver 430, and the processor 410 may control the transceiver 430 to communicate with other devices, and in particular, transmit information or data to other devices, or receive information or data transmitted by other devices.

Here, the transceiver 430 may include a transmitter and a receiver. The transceiver 430 may further include one or more antennas.

In some embodiments, the communication device 400 may specifically be the network device according to the embodiment of the present disclosure, and the communication device 400 may implement the corresponding processes implemented by the network device in the method according to any one of the embodiments of the present disclosure. For the sake of brevity, details thereof will be omitted here.

In some embodiments, the communication device 400 may specifically be the terminal device according to the embodiment of the present disclosure, and the communication device 400 may implement the corresponding processes implemented by the terminal device in the method according to any one of the embodiments of the present disclosure. For the sake of brevity, details thereof will be omitted here.

FIG. 7 is a schematic diagram showing a structure of an apparatus according to an embodiment of the present disclosure. The apparatus 500 shown in FIG. 7 includes a processor 510, and the processor 510 can invoke and execute a computer program from a memory to implement the method according to the embodiment of the present disclosure.

In some embodiments, as shown in FIG. 7, the apparatus 500 may further include a memory 520. The processor 510 can invoke and execute a computer program from the memory 520 to implement the method according to the embodiment of the present disclosure.

The memory 520 may be a separate device independent from the processor 510, or may be integrated in the processor 510.

In some embodiments, the apparatus 500 may further include an input interface 530. The processor 510 can control the input interface 530 to communicate with other devices or chips, and in particular, obtain information or data transmitted by other devices or chips.

In some embodiments, the apparatus 500 may further include an output interface 540. The processor 510 can control the output interface 540 to communicate with other devices or chips, and in particular, output information or data to other devices or chips.

In some embodiments, the apparatus can be applied to the network device in the embodiment of the present disclosure, and the apparatus can implement the corresponding processes implemented by the network device in the method according to any one of the embodiments of the present disclosure. For the sake of brevity, details thereof will be omitted here.

In some embodiments, the apparatus can be applied to the terminal device in the embodiment of the present disclosure, and the apparatus can implement the corresponding processes implemented by the terminal device in the method according to any one of the embodiments of the present disclosure. For the sake of brevity, details thereof will be omitted here.

In some embodiments, the apparatus in the embodiment of the present disclosure may be a chip, e.g., system-level chip, a system-chip, a chip system, or a system-on-chip.

FIG. 8 is a schematic block diagram showing a communication system 600 according to an embodiment of the present disclosure. As shown in FIG. 8, the communication system 600 includes a terminal device 610 and a network device 620.

Here, the terminal device 610 can be configured to implement the corresponding functions implemented by the terminal device in the above method, and the network device 620 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the actions of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, actions, and logical block diagrams disclosed in the embodiments of the present disclosure can be implemented or performed. The general purpose processor may be a microprocessor or any conventional processor. The actions of the method disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the actions of the above method in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

In some embodiments, the computer readable storage medium can be applied to the network device in the embodiment of the present disclosure, and the computer program can cause a computer to perform corresponding procedures implemented by the network device in the method according to any one of the embodiments of the present disclosure. Details thereof will be omitted here for simplicity.

In some embodiments, the computer readable storage medium can be applied to the terminal device in the embodiment of the present disclosure, and the computer program can cause a computer to perform corresponding procedures implemented by the terminal device in the method according to any one of the embodiments of the present disclosure. Details thereof will be omitted here for simplicity.

An embodiment of the present disclosure also provides a computer program product including computer program instructions.

In some embodiments, the computer program product can be applied to the network device in the embodiment of the present disclosure, and the computer program instructions can cause a computer to perform corresponding procedures implemented by the network device in the method according to any one of the embodiments of the present disclosure. Details thereof will be omitted here for simplicity.

In some embodiments, the computer program product can be applied to the terminal device in the embodiment of the present disclosure, and the computer program instructions can cause a computer to perform corresponding procedures implemented by the terminal device in the method according to any one of the embodiments of the present disclosure. Details thereof will be omitted here for simplicity.

An embodiment of the present disclosure also provides a computer program.

In some embodiments, the computer program can be applied to the network device in the embodiment of the present disclosure. The computer program, when executed on a computer, can cause the computer to perform corresponding procedures implemented by the network device in the method according to any one of the embodiments of the present disclosure. Details thereof will be omitted here for simplicity.

In some embodiments, the computer program can be applied to the terminal device in the embodiment of the present disclosure. The computer program, when executed on a computer, can cause the computer to perform corresponding procedures implemented by the terminal device in the method according to any one of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the actionsof the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of the present disclosure as defined by the claims as attached.

## Claims

1. A wireless communication method, comprising:
determining, by a terminal device, whether Synchronization Signal Blocks (SSBs) in a first beam set are usable for a Configured Grant (CG) resource based Small Data Transmission (CG-SDT).

2. The method according to claim 1, wherein
the first beam set comprises all SSBs, or
the first beam set comprises a part or all of SSBs configured with CG resources.

3. The method according to claim 1 or 2, wherein said determining, by the terminal device, whether the SSBs in the first beam set are usable for the CG-SDT comprises:
determining, by the terminal device, whether the SSBs in the first beam set are usable for the CG-SDT according to whether Reference Signal Received Power (RSRP) of the SSBs in the first beam set satisfies a first threshold.

4. The method according to claim 3, wherein the first beam set comprises a part or all of SSBs configured with CG resources, and
said determining, by the terminal device, whether the SSBs in the first beam set are usable for the CG-SDT according to whether the RSRP of the SSBs in the first beam set satisfies the first threshold comprises:
determining, by the terminal device, that the SSBs in the first beam set are usable for the CG-SDT when the RSRP of at least one SSB in the first beam set satisfies the first threshold; and/or
determining, by the terminal device, that the SSBs in the first beam set are unusable for the CG-SDT when no SSB having RSRP satisfying the first threshold exists in the first beam set; and/or
determining, by the terminal device, that the SSBs in the first beam set are usable for the CG-SDT when no SSB having RSRP satisfying the first threshold exists in the first beam set.

5. The method according to claim 4, further comprising, when the RSRP of at least one SSB satisfies the first threshold and the terminal device determines that the SSBs in the first beam set are usable for the CG-SDT:
performing, by the terminal device, an SDT using a CG resource on a first SSB of the at least one SSB.

6. The method according to claim 4, further comprising, when the terminal device determines that the SSBs in the first beam set are unusable for the CG-SDT:
performing, by the terminal device, a Random Access resource based Small Data Transmission (RA-SDT) using a second SSB in the first beam set; or
transmitting, by the terminal device, a random access preamble on a third SSB in the first beam set; or
performing, by the terminal device, a random access resource selection process, and performing an RA-SDT on a fourth SSB in a selected resource.

7. The method according to claim 4, further comprising, when no SSB having RSRP satisfying the first threshold exists in the first beam set and the terminal device determines that the SSBs in the first beam set are usable for the CG-SDT:
performing, by the terminal device, an SDT using a CG resource on a fifth SSB in the first beam set.

8. The method according to claim 1 or 2, wherein said determining, by the terminal device, whether the SSBs in the first beam set are usable for the CG-SDT comprises:
determining, by the terminal device, whether the SSBs in the first beam set are usable for the CG-SDT according to whether the SSBs in the first beam set comprise available CG resources.

9. The method according to claim 8, wherein the first beam set comprises all SSBs, and said determining, by the terminal device, whether the SSBs in the first beam set are usable for the CG-SDT according to whether the SSBs in the first beam set comprise available CG resources comprises:
determining, by the terminal device, that the SSBs in the first beam set are usable for the CG-SDT when Reference Signal Received Power (RSRP) of at least one SSB in the first beam set satisfies a first threshold and an available CG resource exists on the at least one SSB; and/or
determining, by the terminal device, that the SSBs in the first beam set are unusable for the CG-SDT when RSRP of at least one SSB in the first beam set satisfies the first threshold and no available CG resource exists on the at least one SSB; and/or
determining, by the terminal device, that the SSBs in the first beam set are unusable for the CG-SDT when no SSB having RSRP satisfying the first threshold exists in the first beam set; and/or
determining, by the terminal device, that the SSBs in the first beam set are usable for the CG-SDT when no SSB having RSRP satisfying the first threshold exists in the first beam set and an available CG resource exists on a randomly selected SSB in the first beam set.

10. The method according to claim 9, further comprising, when an available CG resource exists on the at least one SSB and the terminal device determines that the SSBs in the first beam set are usable for the CG-SDT:
performing, by the terminal device, an SDT using a CG resource of one SSB with an available CG resource among the at least one SSB.

11. The method according to claim 9, further comprising, when an available CG resource exists on the randomly selected SSB in the first beam set and the terminal device determines that the SSBs in the first beam set are usable for the CG-SDT:
performing, by the terminal device, an SDT using the CG resource on the randomly selected SSB in the first beam set.

12. The method according to claim 9, further comprising, when the terminal device determines that the SSBs in the first beam set are unusable for the CG-SDT:
performing, by the terminal device, a Random Access resource based Small Data Transmission (RA-SDT) on a sixth SSB in the first beam set; or
performing, by the terminal device, a random access resource selection process, and performing the RA-SDT on a seventh SSB in a selected resource.

13. The method according to claim 9, further comprising, when no SSB having RSRP satisfying the first threshold exists in the first beam set and the terminal device determines that the SSBs in the first beam set are unusable for the CG-SDT:
performing, by the terminal device, a Random Access resource based Small Data Transmission (RA-SDT) on an eighth SSB in the first beam set; or
performing, by the terminal device, a random access resource selection process, and performing the RA-SDT on a ninth SSB in a selected resource.

14. The method according to any one of claims 3 to 7 and 9 to 13, wherein the first threshold is pre-configured or agreed by a protocol, or the first threshold is configured by a network device.

15. The method according to any one of claims 1 to 14, wherein the CG resource used for the SDT is configured by a network device.

16. The method according to any one of claims 3 to 7 and 9 to 14, wherein
the first threshold is used for the CG-SDT and a Random Access resource based Small Data Transmission (RA-SDT); or
the first threshold comprises a first sub-threshold and a second sub-threshold,
wherein the first sub-threshold is used for the CG-SDT, and the second sub-threshold is used for the RA-SDT.

17. The method according to claim 16, wherein
a first threshold configuration for configuring the first threshold is comprised in a configuration of the CG resource and/or a configuration of an RA resource; or
a first sub-threshold configuration for configuring the first sub-threshold is comprised in a configuration of the CG resource, and a second sub-threshold configuration for configuring the second sub-threshold is comprised in a configuration of the RA resource; or
one or more of the first threshold configuration for configuring the first threshold, the first sub-threshold configuration for configuring the first sub-threshold, and the second sub-threshold configuration for configuring the second sub-threshold is comprised in a Radio Resource Control (RRC) release message.

18. A terminal device, comprising:
a processing unit configured to determine whether Synchronization Signal Blocks (SSBs) in a first beam set are usable for a Configured Grant (CG) resource based Small Data Transmission (CG-SDT).

19. The terminal device according to claim 18, wherein the first beam set comprises all SSBs, or the first beam set comprises a part or all of SSBs configured with CG resources.

20. The terminal device according to claim 18 or 19, wherein the processing unit is configured to:
determine whether the SSBs in the first beam set are usable for the CG-SDT according to whether Reference Signal Received Power (RSRP) of the SSBs in the first beam set satisfies a first threshold.

21. The terminal device according to claim 20, wherein the first beam set comprises a part or all of SSBs configured with CG resources, and the processing unit is configured to:
determine that the SSBs in the first beam set are usable for the CG-SDT when the RSRP of at least one SSB in the first beam set satisfies the first threshold; and/or
determine that the SSBs in the first beam set are unusable for the CG-SDT when no SSB having RSRP satisfying the first threshold exists in the first beam set; and/or
determine that the SSBs in the first beam set are usable for the CG-SDT when no SSB having RSRP satisfying the first threshold exists in the first beam set.

22. The terminal device according to claim 21, further comprising, when the RSRP of at least one SSB satisfies the first threshold and the terminal device determines that the SSBs in the first beam set are usable for the CG-SDT:
a communication unit configured to perform an SDT using a CG resource on a first SSB of the at least one SSB.

23. The terminal device according to claim 21, further comprising, when the terminal device determines that the SSBs in the first beam set are unusable for the CG-SDT:
a communication unit, wherein
the communication unit is configured to perform a Random Access resource based Small Data Transmission (RA-SDT) using a second SSB in the first beam set; or
the communication unit is configured to transmit a random access preamble on a third SSB in the first beam set; or
the processing unit is configured to perform a random access resource selection process, and the communication unit is configured to perform an RA-SDT on a fourth SSB in a selected resource.

24. The terminal device according to claim 21, further comprising, when no SSB having RSRP satisfying the first threshold exists in the first beam set and the terminal device determines that the SSBs in the first beam set are usable for the CG-SDT:
a communication unit configured to perform an SDT using a CG resource on a fifth SSB in the first beam set.

25. The terminal device according to claim 18 or 19, wherein the processing unit is configured to:
determine whether the SSBs in the first beam set are usable for the CG-SDT according to whether the SSBs in the first beam set comprise available CG resources.

26. The terminal device of claim 25, wherein the first beam set comprise all SSBs, and the processing unit is configured to:
determine that the SSBs in the first beam set are usable for the CG-SDT when RSRP of at least one SSB in the first beam set satisfies a first threshold and an available CG resource exists on the at least one SSB; and/or
determine that the SSBs in the first beam set are unusable for the CG-SDT when RSRP of at least one SSB in the first beam set satisfies the first threshold and no available CG resource exists on the at least one SSB; and/or
determine that the SSBs in the first beam set are unusable for the CG-SDT when no SSB having RSRP satisfying the first threshold exists in the first beam set; and/or
determine that the SSBs in the first beam set are usable for the CG-SDT when no SSB having RSRP satisfying the first threshold exists in the first beam set and an available CG resource exists on a randomly selected SSB in the first beam set.

27. The terminal device according to claim 26, further comprising, when an available CG resource exists on the at least one SSB and the terminal device determines that the SSBs in the first beam set are usable for the CG-SDT:
a communication unit configured to perform an SDT using a CG resource of one SSB with an available CG resource among the at least one SSB.

28. The terminal device according to claim 26, further comprising, when an available CG resource exists on the randomly selected SSB in the first beam set and the terminal device determines that the SSBs in the first beam set are usable for the CG-SDT:
a communication unit configured to perform an SDT using the CG resource on the randomly selected SSB in the first beam set.

29. The terminal device according to claim 26, further comprising, when the terminal device determines that the SSBs in the first beam set are unusable for the CG-SDT:
a communication unit, wherein
the communication unit is configured to perform a Random Access resource based Small Data Transmission (RA-SDT) on a sixth SSB in the first beam set; or
the processing unit is configured to perform a random access resource selection process, and the communication unit is configured to perform the RA-SDT on a seventh SSB in a selected resource.

30. The terminal device according to claim 26, wherein when no SSB having RSRP satisfying the first threshold exists in the first beam set and the terminal device determines that the SSBs in the first beam set are unusable for the CG-SDT,
the terminal device comprises a communication unit, wherein
the communication unit is configured to perform a Random Access resource based Small Data Transmission (RA-SDT) on an eighth SSB in the first beam set; or
the processing unit is configured to perform a random access resource selection process, and the communication unit is configured to perform the RA-SDT on a ninth SSB in a selected resource.

31. The terminal device according to any one of claims 20 to 24 and 26 to 30, wherein the first threshold is pre-configured or agreed by a protocol, or the first threshold is configured by a network device.

32. The terminal device according to any one of claims 18 to 31, wherein the CG resource used for the SDT is configured by a network device.

33. The terminal device according to any one of claims 20 to 24 and 26 to 31, wherein
the first threshold is used for the CG-SDT and a Random Access resource based Small Data Transmission (RA-SDT); or
the first threshold comprises a first sub-threshold and a second sub-threshold,
wherein the first sub-threshold is used for the CG-SDT, and the second sub-threshold is used for the RA-SDT.

34. The terminal device according to claim 33, wherein
a first threshold configuration for configuring the first threshold is comprised in a configuration of the CG resource and/or a configuration of an RA resource; or
a first sub-threshold configuration for configuring the first sub-threshold is comprised in a configuration of the CG resource, and a second sub-threshold configuration for configuring the second sub-threshold is comprised in a configuration of the RA resource; or
one or more of the first threshold configuration for configuring the first threshold, the first sub-threshold configuration for configuring the first sub-threshold, and the second sub-threshold configuration for configuring the second sub-threshold is comprised in a Radio Resource Control (RRC) release message.

35. A terminal device, comprising a processor and a memory, wherein the memory is configured to store a computer program, and the processor is configured to invoke and execute the computer program stored in the memory to perform the method according to any one of claims 1 to 17.

36. A chip, comprising a processor configured to invoke and execute a computer program from a memory, to enable a device provided with the chip to perform the method according to any one of claims 1 to 17.

37. A computer-readable storage medium, configured to store a computer program that enables a computer to perform the method according to any one of claims 1 to 17.

38. A computer program product, comprising computer program instructions that cause a computer to perform the method according to any one of claims 1 to 17.

39. A computer program, causing a computer to perform the method according to any one of claims 1 to 17.
